(19) Europäisches Patentamt / European Patent Office / Office européen des brevets

(11) **EP 3 434 741 A1**

(12) **EUROPEAN PATENT APPLICATION**
published in accordance with Art. 153(4) EPC

(43) Date of publication:
**30.01.2019 Bulletin 2019/05**

(51) Int Cl.:
*C09D 11/34* *(2014.01)*   *B41J 2/01* *(2006.01)*
*B41M 5/00* *(2006.01)*   *C09D 11/38* *(2014.01)*

(21) Application number: **17769821.4**

(22) Date of filing: **28.02.2017**

(86) International application number:
**PCT/JP2017/007593**

(87) International publication number:
**WO 2017/163776 (28.09.2017 Gazette 2017/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **24.03.2016 JP 2016059711**

(71) Applicant: **Konica Minolta, Inc.
Tokyo 100-7015 (JP)**

(72) Inventors:
• **KONDO, Ai
Tokyo 100-7015 (JP)**
• **GOI, Katsunori
Tokyo 100-7015 (JP)**

(74) Representative: **Henkel, Breuer & Partner
Patentanwälte
Maximiliansplatz 21
80333 München (DE)**

(54) **INKJET INK AND IMAGE FORMING METHOD**

(57)    The present invention is an active light-curable inkjet ink which contains a gelling agent, an ultraviolet absorbent and a photopolymerizable compound. The molecular weight of the ultraviolet absorbent is from 300 to 1,000 (inclusive); and the content of the ultraviolet absorbent is from 5% by mass to 60% by mass (inclusive) relative to the total mass of the gelling agent. According to the present invention, weather resistance of an ink is able to be sufficiently enhanced even if the ink is an inkjet ink containing a gelling agent and an ultraviolet absorbent, while suppressing decrease in the pinning properties and decrease in the storage stability of the gelling temperature of the ink caused by the ultraviolet absorbent contained in the ink.

## Description

Technical Field

The present invention relates to an inkjet ink and an image forming method.

Background Art

An inkjet image forming method is a method for forming an image, including discharging an ink droplet through a nozzle of a discharge head mounted to an inkjet image forming apparatus to allow such an ink droplet to be landed onto a recording medium, thereby forming a dot constituting an image. An inkjet image forming method can simply and inexpensively form a highly fine image because of allowing for landing of an ink onto only a region to be colored, of a recording medium.

An inkjet image forming method can simply and inexpensively form an image, and therefore is used in various printing fields. One known inkjet ink is an ink containing a photocurable compound that is to be cured by irradiation with actinic radiation (hereinafter, also simply referred to as "actinic radiation-curable ink".). An actinic radiation-curable ink has recently increasingly attracted attention because of being capable of forming an image having a high contacting property, even onto a recording medium low in water absorbability.

With respect to an inkjet ink, there is known a technique for allowing an ink to contain an ultraviolet absorber in order to inhibit the density and color of an image from being changed over time due to decomposition or denaturation of a component constituting the image by ultraviolet light (hereinafter, also simply referred to the action for inhibition of the change over time in image density or color as "weather resistance".) (for example, PTL 1 and PTL 2).

With respect to an inkjet ink, there is also known a technique for allowing an ink to contain a gelling agent for reversible sol-gel phase transition of the ink due to the change in temperature. In an image forming method using an ink containing a gelling agent, an ink droplet warmed and formed into a sol form is ejected through a nozzle of an inkjet head. The ink droplet landed onto a recording medium undergoes phase transition to a gel form due to crystallization of the gelling agent by a reduction in temperature. The ink droplet in a gel form is irradiated with actinic radiation and the droplet is thus cured, thereby forming a dot constituting an image. An ink containing a gelling agent can be used to thereby control wet spreading of an ink droplet landed onto a recording medium and prevent combining with a neighboring droplet, thereby forming a more highly fine image (for example, PTL 3 and PTL 4).

Citation List

Patent Literatures

   PTL 1: Japanese Parent Application Laid-Open No. 2005-178331
   PTL 2: Japanese Parent Application Laid-Open No. 2006-123459
   PTL 3: Japanese Parent Application Laid-Open No. 2006-193745
   PTL 4: Japanese Parent Application Laid-Open No. 2010-17710

Summary of Invention

Technical Problem

As described above, an ultraviolet absorber can enhance weather resistance of an image formed. According to findings of the present inventors, however, an ink containing a gelling agent may be hardly enhanced as expected in terms of weather resistance even by an ultraviolet absorber. In addition, if the ink containing a gelling agent further contains an ultraviolet absorber, the ink landed onto a recording medium may hardly undergo gelation (may be hardly pinned) to hardly form a highly fine image and/or easily cause storage stability of the gelation temperature to be deteriorated (cause the change in gelation temperature due to storage).

The present invention has been made in view of the above circumstances, and an object thereof is to provide an inkjet ink containing a gelling agent and an ultraviolet absorber, which can be sufficiently enhanced in weather resistance and which can be suppressed in deterioration in pinning property of the ink and deterioration in storage stability of the gelation temperature due to inclusion of the ultraviolet absorber, as well as an image forming method using such an inkjet ink.

Solution to Problem

The object of the present invention is achieved by the following inkjet ink and image forming method.

[1] An actinic radiation-curable inkjet ink includes a gelling agent, an ultraviolet absorber and a photocurable compound, in which a molecular weight of the ultraviolet absorber is 300 or more and 1,000 or less, and a content of the ultraviolet absorber is 5mass% or more and 60mass% or less based on a total mass of the gelling agent.
[2] In the inkjet ink according to [1], the content of the ultraviolet absorber is 20mass% or more and 40mass% or less based on a total mass of the gelling agent.
[3] In the inkjet ink according to [1] or [2], the molecular weight of the ultraviolet absorber is 500 or more and 800 or less.
[4] In the inkjet ink according to any one of [1] to [3], the ultraviolet absorber is a hydroxyphenyltriazine-based compound.
[5] The inkjet ink according to any one of [1] to [4] further includes a light stabilizer.
[6] An image forming method includes: discharging a droplet of the inkjet ink according to any one of [1] to [5] through a nozzle of an inkjet head to land the droplet onto a recording medium; and irradiating the droplet landed onto the recording medium with actinic radiation.

Advantageous Effects of Invention

The present invention provides an inkjet ink containing a gelling agent and an ultraviolet absorber, which can be sufficiently enhanced in weather resistance and which can be suppressed in deterioration in pinning property of the ink and deterioration in storage stability due to inclusion of the ultraviolet absorber, as well as an image forming method using such an inkjet ink.

Description of Embodiments

According to new findings of the present inventors, when an ink containing a gelling agent contains an ultraviolet absorber low in molecular weight, the ultraviolet absorber is easily volatilized by heating in ejection. If the ultraviolet absorber is volatilized in ejection, an image formed does not include a sufficient amount of the ultraviolet absorber, and thus weather resistance is hardly enhanced as expected. While such volatilization by heating can equally occur in a component low in molecular weight, contained in the ink, it is considered that a component low in content, for example the ultraviolet absorber, is particularly highly affected by a reduction in content due to volatilization. A compound low in molecular weight may be bled out from the surface of a cured film obtained by curing of the ink, resulting in deterioration in quality of an image.

On the contrary, it is considered that an ultraviolet absorber having a molecular weight of 300 or more can be hardly volatilized even by heating of an ink in ejection, and thus allows weather resistance of an image formed to be sufficiently enhanced and allows bleeding out to hardly occur. The upper limit of the molecular weight can be set within the range where ink ejection property is not remarkably deteriorated and the ultraviolet absorber is easily available, and the upper limit can be, for example, 1,000 or less. In addition, when the molecular weight of the ultraviolet absorber is 1000 or less, the ink viscosity is not too high and ink ejection stability is hardly deteriorated. Furthermore, when the molecular weight of the ultraviolet absorber is 1,000 or less, the solubility of the ultraviolet absorber is not too low and thus the ultraviolet absorber is hardly precipitated during storage of the ink.

On the other hand, according to still new findings of the present inventors, an ultraviolet absorber having the molecular weight hardly causes an ink to be pinned in an ink droplet landed onto a recording medium. The reason for this is considered because the ultraviolet absorber having the molecular weight has the property of being easily attached on the crystal surface of a gelling agent being crystallized and such a property thus easily inhibits crystallization of the gelling agent. It has also been found that the ultraviolet absorber having the molecular weight interacts with the gelling agent to result in the change in gelation temperature of an ink, not imparting favorable pinning property in the case of formation of an image in the same conditions. Such deterioration in pinning property due to the interaction of the ultraviolet absorber with the gelling agent particularly easily progresses during storage of an ink, and it is thus considered that an ink stored is easily changed in the gelation temperature of the ink and is easily deteriorated in pinning property.

On the contrary, the present inventors have found that the content of the ultraviolet absorber having the molecular weight can be 5mass% or more and 60mass% or less based on the total mass of the gelling agent, thereby allowing the deterioration in pinning property and the deterioration in storage stability of the gelation temperature to be sufficiently suppressed, with weather resistance being sufficiently enhanced by the ultraviolet absorber, and thus have completed the present invention.

1. Inkjet ink

The inkjet ink of the present invention (hereinafter, also simply referred to as "inkjet ink".) is an actinic radiation-curable ink which contains a gelling agent, an ultraviolet absorber and a photocurable compound, and which is to be cured by irradiation with actinic radiation. The molecular weight of the ultraviolet absorber is 300 or more and 1,000 or less, and the content of the ultraviolet absorber in the inkjet ink is 5mass% or more and 60mass% or less based on the total mass of the gelling agent. The inkjet ink may further contain a light stabilizer.

1-1. Gelling agent

The gelling agent may be a compound that can allow an ink droplet landed onto a recording medium to undergo gelation for temporary fixation (pinning). When an ink landed onto a recording medium undergoes gelation and is pinned, wet spreading of the ink can be suppressed to hardly result in combining with a neighboring dot, and therefore a more highly fine image can be formed. In addition, when the ink is in a gel form, oxygen in the environment is inhibited from being taken into the ink droplet and inhibition of curing due to oxygen hardly occurs, and therefore a highly fine image can be formed at a higher rate. The gelling agent may be included in the inkjet ink singly or in combinations of two or more thereof.

The content of the gelling agent is preferably 1.0mass% or more and 10.0mass% or less based on the total mass of the ink. When the content of the gelling agent is 1.0mass% or more, pinning property of the ink can be sufficiently enhanced and a more highly fine image can be formed. When the content of the gelling agent is 10.0mass% or less, the gelling agent can be hardly precipitated on the surface of an image formed, to allow the gloss of the image to be closer to the gloss of an image formed from other ink, and to more enhance ejection property of the ink through an inkjet head. The content of the gelling agent in the inkjet ink is preferably 1.0mass% or more and 5.0mass% or less, more preferably 1.2mass% or more and 5.0mass% or less, further preferably 1.5mass% or more and 3.0mass% or less from the above viewpoint.

The gelling agent is preferably crystallized in the ink at a temperature equal to or less than the gelation temperature of the ink from the following viewpoint. The gelation temperature refers to a temperature at which the ink undergoes phase transition from sol to gel to result in a rapid change in the ink viscosity while the ink formed into a sol or liquid by heating is cooled. Specifically, the gelation temperature of the ink can be defined as a temperature at which the viscosity is rapidly increased while the ink formed into a sol or liquid is cooled with the viscosity being measured by a rheometer (for example, MCR300 manufactured by Physica).

When the gelling agent is crystallized in the ink, a structure where the photocurable compound is enclosed in a three-dimensional space formed by the gelling agent crystallized in the form of a plate may be formed (hereinafter, referred to such a structure as "card house structure".). When the card house structure is formed, the photocurable compound is retained in the form of a liquid in the space and thus an ink droplet is further hardly wet spread to allow pinning property of the ink to be more enhanced. When pinning property of the ink is enhanced, combining of the ink droplets landed onto a recording medium hardly occurs, and a more highly fine image can be formed.

The photocurable compound and the gelling agent dissolved in the ink are compatible each other from the viewpoint that the card house structure is easily formed. On the contrary, if the photocurable compound and the gelling agent dissolved in the ink undergo phase separation, the card house structure may be hardly formed.

Examples of the gelling agent suitable for formation of the card house structure by crystallization include ketone wax, ester wax, petroleum wax, vegetable wax, animal wax, mineral wax, hydrogenated castor oil, modified wax, higher fatty acid, higher alcohol, hydroxystearic acid, fatty acid amide including N-substituted fatty acid amide and special fatty acid amide, higher amine, sucrose fatty acid ester, synthetic wax, dibenzylidene sorbitol, dimer acid, and dimer diol.

Examples of the ketone wax include dilignoceryl ketone, dibehenyl ketone, distearyl ketone, dieicosyl ketone, dipalmityl ketone, dilauryl ketone, dimyristyl ketone, myristyl palmityl ketone and palmityl stearyl ketone.

Examples of the ester wax include behenyl behenate, icosyl icosanoate, stearyl stearate, palmityl stearate, cetyl palmitate, myristyl myristate, cetyl myristate, myricyl cerotate, stearyl stearate, oleyl palmitate, glycerin fatty acid ester, sorbitan fatty acid ester, propylene glycol fatty acid ester, ethylene glycol fatty acid ester and polyoxyethylene fatty acid ester.

Examples of commercially available products of the ester wax include EMALEX series produced by Nihon Emulsion Co., Ltd. ("EMALEX" is a registered trademark of the company), and RIKEMAL series and POEM series produced by Riken Vitamin Co., Ltd. ("RIKEMAL" and "POEM" are each a registered trademark of the company).

Examples of the petroleum wax include petroleum wax including paraffin wax, microcrystalline wax and petrolatum.

Examples of the vegetable wax include candelilla wax, carnauba wax, rice wax, Japan wax, jojoba oil, solid jojoba wax and jojoba ester.

Examples of the animal wax include beeswax, lanolin and spermaceti.

Examples of the mineral wax include montan wax and hydrogenated wax.

Examples of the modified wax include montan wax derivatives, paraffin wax derivatives, microcrystalline wax derivatives, 12-hydroxystearic acid derivatives and polyethylene wax derivatives.

Examples of the higher fatty acid include behenic acid, arachidic acid, stearic acid, palmitic acid, myristic acid, lauric acid, oleic acid and erucic acid.

Examples of the higher alcohol include stearyl alcohol and behenyl alcohol.

Examples of the hydroxystearic acid include 12-hydroxystearic acid.

Examples of the fatty acid amide include lauric acid amide, stearic acid amide, behenic acid amide, oleic acid amide, erucic acid amide, ricinoleic acid amide and 12-hydroxystearic acid amide.

Examples of commercially available products of the fatty acid amide include NIKKA AMIDE series produced by Nippon Kasei Chemical Co., Ltd. ("NIKKA AMIDE" is a registered trademark of the company), ITOWAX series produced by Itoh Oil Chemicals Co., Ltd., and FATTYAMID series produced by Kao Corporation.

Examples of the N-substituted fatty acid amide include N-stearylstearic acid amide and N-oleyl palmitic acid amide.

Examples of the special fatty acid amide include N,N'-ethylene bisstearamide, N,N'-ethylene bis-12-hydroxystearamide and N,N'-xylylene bisstearamide.

Examples of the higher amine include dodecylamine, tetradecylamine and octadecylamine.

Examples of the sucrose fatty acid ester include sucrose stearic acid and sucrose palmitic acid.

Examples of commercially available products of the sucrose fatty acid ester include RYOTO Sugar Ester series produced by Mitsubishi-Chemical Foods Corporation ("RYOTO" is a registered trademark of the company).

Examples of the synthetic wax include polyethylene wax and $\alpha$-olefin-malic anhydride copolymer wax.

Examples of commercially available products of the synthetic wax include UNILIN series produced by Baker-Petrolite Corporation ("UNILIN" is a registered trademark of the company).

Examples of the dibenzylidene sorbitol include 1,3:2,4-bis-O-benzylidene-D-glucitol.

Examples of commercially available products of the dibenzylidene sorbitol include Gel ALL D produced by New Japan Chemical Co., Ltd. ("Gel ALL" is a registered trademark of the company).

Examples of commercially available products of the dimer diol include PRIPOR series produced by CRODA International Plc ("PRIPOR" is a registered trademark of the company).

Among these gelling agents, ketone wax, ester wax, higher fatty acid, higher alcohol and fatty acid amide are preferable from the viewpoint of a more enhancement in pinning property, and ketone wax represented by the following general formula (G1) and ester wax represented by the following general formula (G2) are further preferable from the above viewpoint. The ketone wax represented by the following general formula (G1) and the ester wax represented by the following general formula (G2) may be included in the inkjet ink singly or in combinations of two or more thereof. Any one or both of the ketone wax represented by the following general formula (G1) and the ester wax represented by the following general formula (G2) may be included in the inkjet ink.

General formula (G1): R1-CO-R2

Each of R1 and R2 in general formula (G1) is a $C_{9-25}$ linear or branched hydrocarbon group.

General formula (G2): R3-COO-R4

Each of R3 and R4 in general formula (G2) is a $C_{9-25}$ linear or branched hydrocarbon group.

The number of carbon atoms of the linear or branched hydrocarbon group in the ketone wax represented by general formula (G1) or the ester wax represented by general formula (G2) is 9 or more, thereby more enhancing crystallinity of the gelling agent and generating a sufficient space in the card house structure. Therefore, the photocurable compound is sufficiently enclosed in the space, and pinning property of the ink is more enhanced. In addition, the number of carbon atoms of the linear or branched hydrocarbon group is 25 or less, thereby not excessively raising the solation temperature of the ink and thus not resulting in any need for excessive heating in ejection of the ink. Each of R1 and R2 particularly preferably is a $C_{11}$ or more and less than $C_{23}$ linear hydrocarbon group from the above viewpoint.

Either R1 or R2, or either R3 or R4 preferably is a $C_{11}$ or more and less than $C_{23}$ saturated hydrocarbon group from the viewpoint that the gelation temperature of the ink is raised to allow the ink to rapidly undergo gelation after landing. Both R1 and R2, or both R3 and R4 are more preferably $C_{11}$ or more and less than $C_{23}$ saturated hydrocarbon groups from the above viewpoint.

Examples of the ketone wax represented by general formula (G1) include dilignoceryl ketone ($C_{23-24}$), dibehenyl ketone ($C_{21-22}$), distearyl ketone ($C_{17-18}$), dieicosyl ketone ($C_{19-20}$), dipalmityl ketone ($C_{15-16}$), dimyristyl ketone ($C_{13-14}$), dilauryl ketone ($C_{11-12}$), lauryl myristyl ketone ($C_{11-14}$), lauryl palmityl ketone (11-16), myristyl palmityl ketone (13-16), myristylstearyl ketone (13-18), myristylbehenyl ketone (13-22), palmitylstearyl ketone (15-18), palmityl behenyl ketone (15-22) and stearylbehenyl ketone (17-22). The numbers of carbon atoms in the brackets here represent the respective numbers of carbon atoms of two hydrocarbon groups decoupled by a carbonyl group.

Examples of commercially available products of the ketone wax represented by general formula (G1) include 18-Pentatriacontanon produced by Alfa Aesar, Hentriacontan-16-on produced by Alfa Aesar, and KAOWAX T1 produced by Kao Corporation.

Examples of commercially available products of the fatty acid or ester wax represented by general formula (G2) include behenyl behenate ($C_{21-22}$), icosyl icosanoate ($C_{19-20}$), stearyl stearate ($C_{17-18}$), palmityl stearate ($C_{17-16}$), lauryl stearate ($C_{17-12}$), cetyl palmitate ($C_{15-16}$), stearyl palmitate ($C_{15-18}$), myristyl myristate ($C_{13-14}$), cetyl myristate ($C_{13-16}$), octyldodecyl myristate ($C_{13-20}$), stearyl oleate ($C_{17-18}$), stearyl erucate ($C_{21-18}$), stearyl linoleate ($C_{17-18}$), behenyl oleate ($C_{18-22}$) and arachidyl linoleate ($C_{17-20}$). The numbers of carbon atoms in the brackets here represent the respective numbers of carbon atoms of two hydrocarbon groups decoupled by an ester group.

Examples of commercially available products of the ester wax represented by general formula (G2) include UNISTAR M-2222SL and SPERMACETI produced by NOF Corporation ("UNISTAR" is a registered trademark of the company), EXCEPARL SS and EXCEPARL MY-M produced by Kao Corporation ("EXCEPARL" is a registered trademark of the company), EMALEX CC-18 and EMALEX CC-10 produced by Nihon Emulsion Co., Ltd., and AMREPS PC produced by Kokyu Alcohol Kogyo Co., Ltd. ("AMREPS" is a registered trademark of the company). Such commercially available products are often a mixture of two or more kinds, and therefore may be, if necessary, separated and purified, and then contained in the ink.

1-2. Ultraviolet absorber

The ultraviolet absorber can be an organic compound having a maximum absorption wavelength in the ultraviolet light range, in particular, in the wavelength range of 280 nm or more and 400 nm or less. The ultraviolet absorber may be included in the inkjet ink singly or in combinations of two or more thereof. It is here considered that an inorganic ultraviolet absorber such as titanium oxide causes transparency of an ink cured to be deteriorated and thus cannot sufficiently enhance chromogenic property of an image.

The molecular weight of the ultraviolet absorber is 300 or more and 1,000 or less. It is considered that an ultraviolet absorber having a molecular weight of 300 or more is hardly volatilized even by heating of an ink in ejection and can sufficiently enhance weather resistance of an image formed. An ultraviolet absorber having a molecular weight of 1,000 or less does not remarkably deteriorate ink ejection property and is easily available. The molecular weight of the ultraviolet absorber is preferably 500 or more and 800 or less from the viewpoint that weather resistance can be sufficiently imparted with pinning property of the ink and storage stability of the gelation temperature being maintained. The molecular weight of the ultraviolet absorber can be easily presumed from the structure.

The content of the ultraviolet absorber is 5mass% or more and 60mass% or less based on the total mass of the gelling agent. When the content of the ultraviolet absorber is 5mass% or more based on the total mass of the gelling agent, weather resistance of an image formed can be sufficiently enhanced. When the content of the ultraviolet absorber is 60mass% or less based on the total mass of the gelling agent, the ultraviolet absorber can be less attached onto a crystal face of the gelling agent being probably crystallized in the ink droplet landed onto a recording medium, thereby suppressing deterioration in pinning property. When the content of the ultraviolet absorber is 60mass% or less based on the total mass of the gelling agent, deterioration in pinning property of the ink and deterioration in storage stability of the gelation temperature, due to the interaction of the ultraviolet absorber with the gelling agent, during ink storage can be sufficiently suppressed. The content of the ultraviolet absorber is preferably 20mass% or more and 40mass% or less based on the total mass of the gelling agent from the viewpoint that deterioration in pinning property of the ink and deterioration in storage stability of the gelation temperature, due to inclusion of the ultraviolet absorber, are more suppressed with weather resistance being sufficiently enhanced. More preferably, the molecular weight of the ultraviolet absorber is 500 or more and 800 or less and the content of the ultraviolet absorber is 20mass% or more and 40mass% or less based on the total mass of the gelling agent from the above viewpoint.

The content of the ultraviolet absorber based on the total mass of the inkjet ink is preferably 0.05mass% or more and 6.0mass% or less, more preferably 0.1mass% or more and 3.0mass% or less, further preferably 0.2mass% or more and 1.5mass% or less, preferably 0.3mass% or more and 0.8mass% or less.

Examples of the ultraviolet absorber include ultraviolet absorbers such as a benzophenone compound, a benzotriazole compound, a salicylic acid ester compound, a hydroxyphenyltriazine compound and a cyano acrylate compound.

Examples of the ultraviolet absorber being a benzophenone compound include 2-hydroxy-4-n-octoxy-benzophenone, 2-hydroxy-4-dodecyloxy-benzophenone, 2-hydroxy-4-octadecyloxy-benzophenone, 2-hydroxy-4-benzyloxy-benzophenone and 1,4-bis(4-benzoyl-3-hydroxyphenoxy)-butane.

Examples of commercially available products of the ultraviolet absorber being a benzophenone compound include Sumisorb 130 produced by Sumitomo Chemical Co., Ltd. ("Sumisorb" is a registered trademark of the company), ADK STAB 1413 produced by ADEKA CORPORATION ("ADK STAB" is a registered trademark of the company), and SEESORB 101S, SEESORB 102, SEESORB 103, SEESORB 105 and SEESORB 151 produced by SHIPRO KASEI KAISHA, LTD ("SEESORB" is a registered trademark of the company).

Examples of the ultraviolet absorber being a benzotriazole compound include 2-(2'-hydroxy-3',5'-di-t-butylphenyl)benzotriazole, 2-(2'-hydroxy-3'-t-butyl-5'-methylphenyl)benzotriazole, 2-(3,5-di-t-pentyl-2-hydroxyphenyl-2-benzotriazole, 2-(2-benzotriazole-2-yl)-4-methyl-6-(3,4,5,6-tetrahydrophthalimidylmethyl)phenol, 2-(2-hydroxy-4-octyloxyphenyl)-2-benzotriazole and 2-(2-hydroxy-5-t-octylphenyl)-2-benzotriazole.

Examples of commercially available products of the ultraviolet absorber being a benzotriazole compound include Sumisorb 250, Sumisorb 300, Sumisorb 340 and Sumisorb 350 produced by Sumitomo Chemical Co., Ltd., TINUVIN 99-2, TINUVIN 234, TINUVIN 320, TINUVIN 326, TINUVIN 328, TINUVIN 329, TINUVIN 384, TINUVIN 384-2, TINUVIN 900, TINUVIN 928 and TINUVIN 1130 produced by BASF SE ("TINUVIN" is a registered trademark of the company), ADK STAB LA-29, ADK STAB LA-31, ADK STAB LA-31RG, ADK STAB LA-31G, ADK STAB LA-36 and ADK STAB LA-36RG produced by ADEKA CORPORATION, and SEESORB 703, SEESORB 704, SEESORB 706, SEESORB 707 and SEESORB 709 produced by SHIPRO KASEI KAISHA, LTD.

Examples of the ultraviolet absorber being a salicylic acid ester compound include 2-4-di-t-butylphenyl-3,5-di-t-butyl-4-hydroxybenzoate.

Examples of commercially available products of the ultraviolet absorber being a salicylic acid ester compound include Sumisorb 400 produced by Sumitomo Chemical Co., Ltd., and SEESORB 712 produced by SHIPRO KASEI KAISHA, LTD.

Examples of the ultraviolet absorber being a hydroxyphenyltriazine compound include 2,4-diphenyl-6-(2-hydroxy-4-methoxyphenyl)-1,3,5-triazine, 2,4-diphenyl-6-(2-hydroxy-4-ethoxyphenyl)-1,3 ,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2-(2-hydroxy-4-[1-octyloxycarbonylethoxy]phenyl)-4,6-bis(4-phenylphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine and 2,4-diphenyl-6-(2-hydroxy-4-benzyloxyphenyl)-1,3,5-triazine.

Examples of commercially available products of the ultraviolet absorber being a hydroxyphenyltriazine compound include TINUVIN 400, TINUVIN 405, TINUVIN 460, TINUVIN 477, TINUVIN 479, TINUVIN 777 and TINUVIN 1577ED produced by BASF SE, and ADK STAB LA-F70 produced by ADEKA CORPORATION.

Examples of the ultraviolet absorber being a cyano acrylate compound include 2-ethylhexyl 2-cyano-3,3-diphenylacrylate.

Examples of commercially available products of the ultraviolet absorber being a cyano acrylate compound include SEESORB 502 produced by SHIPRO KASEI KAISHA, LTD.

Among them, the hydroxyphenyltriazine compound more absorbs ultraviolet light in a shorter wavelength range (280 to 320 nm) of an ultraviolet light range (280 to 400 nm), such light having particularly high energy, and thus can more enhance weather resistance of an image formed. The hydroxyphenyltriazine compound less absorbs light in the LED wavelength range than the benzotriazole compound and the like, and therefore hardly causes inhibition of curing. As the hydroxyphenyltriazine compound, 2-(2-hydroxy-4-[1-octyloxycarbonylethoxy)phenyl)-4,6-bis(4-phenylphenyl)-1,3,5-triazine (TINUVIN 479) is preferable because of having a particularly large absorption coefficient and thus imparting a higher weather resistance even in a smaller amount.

A combination of ultraviolet absorbers different in absorption wavelength is preferably used because of imparting a higher weather resistance with the respective amounts thereof being decreased.

1-3. Photocurable compound

The photocurable compound may be a compound which has the following action: the compound is irradiated with actinic radiation and thus polymerized or crosslinked, to thereby cure the ink. Examples of the photocurable compound include a radical polymerizable compound and a cation-polymerizable compound. The photocurable compound may be any of a monomer, a polymerizable oligomer, a prepolymer or a mixture thereof. The photocurable compound may be included in the inkjet ink singly or in combinations of two or more thereof.

The content of the photocurable compound can be, for example, 1mass% or more and 97mass% or less based on the total mass of the inkjet ink.

The radical polymerizable compound is preferably an unsaturated carboxylic acid ester compound, more preferably (meth)acrylate. In the present invention, the "(meth)acrylate" means acrylate or methacrylate, the "(meth)acryloyl group" means an acryloyl group or a methacryloyl group, and the "(meth)acrylic" means an acrylic or a methacrylic. Examples of the (meth)acrylate include monofunctional acrylates including isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, 2-(meth)acryloyloxyethylhexahydrophthalic acid, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, phenoxyethyl (meth)acrylate, tetrahydro furfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth)acryloyloxyethylsuccinic acid, 2-(meth)acryloyloxyethylphthalic acid, 2-(meth)acryloyloxyethyl-2-hydroxyethyl-phthalic acid and t-butylcyclohexyl (meth)acrylate, as well as polyfunctional acrylates including bifunctional acrylates including triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, PO adduct di(meth)acrylate of bisphenol A, hydroxypivalic acid neopentyl glycol di(meth)acrylate, polytetramethylene glycol di(meth)acrylate, polyethylene glycol diacrylate, tripropylene glycol diacrylate and tricyclodecanedimethanol diacrylate, and tri- or higher functional acrylates including trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerinpropoxy tri(meth)acrylate and pentaerythritolethoxy tetra(meth)acrylate.

The (meth)acrylate is preferably stearyl (meth)acrylate, lauryl (meth)acrylate, isostearyl (meth)acrylate, ethoxydiethylene glycol (meth)acrylate, isobornyl (meth)acrylate, tetraethylene glycol di(meth)acrylate, glycerinpropoxy tri(meth)acrylate, or the like from the viewpoint of photosensitivity.

The (meth)acrylate may be a modified product. Examples of the (meth)acrylate being a modified product include ethyleneoxide-modified (meth)acrylates including ethyleneoxide-modified trimethylolpropane tri(meth)acrylate and ethyleneoxide-modified pentaerythritol tetraacrylate, caprolactone-modified (meth)acrylates including caprolactone-modified trimethylolpropane tri(meth)acrylate, and caprolactam-modified (meth)acrylates including caprolactam-modified dipentaerythritol hexa(meth)acrylate.

The (meth)acrylate may be a polymerizable oligomer. Examples of the (meth)acrylate being a polymerizable oligomer include an epoxy (meth)acrylate oligomer, an aliphatic urethane (meth)acrylate oligomer, an aromatic urethane (meth)acrylate oligomer, a polyester (meth)acrylate oligomer and a linear (meth)acrylic oligomer.

The cation-polymerizable compound can be an epoxy compound, a vinyl ether compound, an oxetane compound, and the like. The cation-polymerizable compound may be included in the inkjet ink singly or in combinations of two or more thereof.

1-4. Light stabilizer

The light stabilizer can be an organic compound having the action of scavenging radical. The light stabilizer may be included in the inkjet ink singly or in combinations of two or more thereof.

The light stabilizer scavenges radical generated by light irradiation or heating of an image formed, and therefore can more enhance weather resistance of an image to be formed, and can also suppress the change over time in the density or coloration of an image due to not only light, but also heat. The light stabilizer also suppresses deterioration in weather resistance, which can be caused by a decrease in the amount of the ultraviolet absorber in the present invention. Therefore, the inkjet ink, when further containing the light stabilizer, can be enhanced in all of pinning property, storage stability of the gelation temperature, and weather resistance.

Examples of the light stabilizer include light stabilizers such as a hindered amine-based compound (HALS), a hindered phenol-based compound, a hindered amide-based compound and TEMPO. Such a light stabilizer has a radical scavenging mechanism where the light stabilizer scavenges radical and then is returned to the original form for scavenging, and therefore can repeatedly scavenge radical and can more enhance weather resistance.

Examples of the light stabilizer being a hindered amine-based compound include bis(1-octyloxy-2,2,6,6-tetramethyl-4-piperidyl)sebacate, 2,4-bis[N-butyl-N-(1-cyclohexyloxy-2,2,6,6-tetramethylpiperidin-4-yl)amino]-6-(2-bydroxyethylamine)-1,3,5-triazi ne, a succinic acid dimethyl-1-(2-hydroxyethyl)-4-hydroxy-2,2,6,6-tetramethylpiperidine polycondensate, bis(2,2,6,6-tetramethyl-4-piperidyl)sebacate, an N,N'-bis(3-aminopropyl)ethylenediamine-2,4-bis[N-butyl-N-(1,2,2,6,6-pentamethyl-4-piperidyl)amino]-6-chloro-1, 3,5-triazine condensate and poly[{6-(1,1,3,3-tetramethylbutyl)amino-1,3,5-triazine-2,4-diyl}{(2,2,6,6-tetramethyl-4-piperidyl)imino}hexamethy lene {(2,2,6,6-tetramethyl-4-piperidyl)imino}]hexamethyl.

Examples of commercially available products of the light stabilizer being a hindered amine-based compound include TINUVIN 123, TINUVIN 152, TINUVIN 622 and TINUVIN 770, and CHIMASSORB 119, and CHIMASSORB 944 produced by BASF SE ("CHIMASSORB" is a registered trademark of the company).

Examples of the light stabilizer being a hindered phenol-based compound include triethylene glycol-bis[3-(3-t-butyl-5-methyl-4-hydroxyphenyl)propionate], 1,6-hexanediol-bis[3-(3,5-di-t-butyl-4-hydroxyphenyl)propionate], 2,4-bis-(n-octylthio)-6-(4-hydroxy-3,5-di-t-butylanilino)-1,3,5-triazine, pentaerythrity]-tetrakis[3-(3,5-di-t-butyl-4-hydroxyphenyl)propionate], 2,2-thio-diethylenebis[3-(3,5-di-t-butyl-4-hydroxyphenyl)propionate], octadecyl-3-(3,5-di-t-butyl-4-hydroxyphenyl)propionate, N,N'-hexamethylene bis(3,5-di-t-butyl-4-hydroxy-hydrocinnamamide), 3,5-di-t-butyl-4-hydroxybenzyl phosphonate-diethyl ester, 1,3,5-trimethyl-2,4,6-tris(3,5-di-t-butyl-4-hydroxybenzyl)benzene, 2,4-bis[(octylthio)methyl]-O-cresol and isooctyl-3-(3,5-di-t-butyl-4-hydroxyphenyl)propionate.

Examples of commercially available products of the light stabilizer being a hindered phenol-based compound include IRGANOX 245, IRGANOX 259, IRGANOX 565, IRGANOX 1010, IRGANOX 1035, IRGANOX 1076, IRGANOX 1098, IRGANOX 1222, IRGANOX 1330, IRGANOX 1520 and IRGANOX 1135 produced by BASF SE ("IRGANOX" is a registered trademark of the company).

Examples of the light stabilizer being a hindered amine-based compound and being also a hindered phenol-based compound include bis(1,2,2,6,6-pentamethyl-4-piperidinyl)-[[3,5-bis(1,1-dimethylethyl)-4-hydroxyphenyl]methyl]butylmalonate.

Examples of commercially available products of the light stabilizer being a hindered amine-based compound and being also a hindered phenol-based compound include TINUVIN 144 produced by BASF SE.

The content of the light stabilizer is preferably 0.02mass% or more and 2.0mass% or less, more preferably 0.05mass% or more and 1.0mass% or less based on the total mass of the inkjet ink.

1-5. Other components

The inkjet ink may further include any components such as an ultraviolet absorber having a molecular weight of less than 300, a photopolymerization initiator, a colorant, a dispersant, a photosensitizer, a polymerization inhibitor and a surfactant other than the above components as long as desired weather resistance, pinning property, and storage stability of the gelation temperature can be achieved. Such components may be each included in a particular gel ink singly or in combinations of two or more thereof.

Examples of the ultraviolet absorber having a molecular weight of less than 300 include 2,4-dihydroxy-benzophenone, 2-hydroxy-4-methoxy-benzophenone, 2,2'-dihydroxy-4-methoxy-benzophenone, 2,2',4,4'-tetrahydroxy-benzophenone and 2,2'-dihydroxy-4,4'-dimethoxy-benzophenone which are benzophenone compounds, 2-(2-hydroxy-5-methylphenyl)benzotriazole and 2-(2-hydroxy-5-t-butylphenyl)benzotriazole which are benzotriazole compounds, phenyl salicylate and 4-t-butylphenyl salicylate which are salicylic acid ester compounds, and ethyl-2-cyano-3,3-diphenyl acrylate which is a cyano acrylate compound.

Examples of commercially available products of the ultraviolet absorber having a molecular weight of less than 300 include Sumisorb 200 produced by Sumitomo Chemical Co., Ltd., TINUVIN PS produced by BASF SE, ADK STAB LA-32 produced by ADEKA CORPORATION, and SEESORB 701 produced by SHIPRO KASEI KAISHA, LTD., which are benzotriazole-based compounds, SEESORB 100, SEESORB 101, SEESORB 106 and SEESORB 107 produced by SHIPRO KASEI KAISHA, LTD., which are benzophenone-based compounds, SEESORB 201 and SEESORB 202 produced by SHIPRO KASEI KAISHA, LTD., which are salicylic acid ester compounds, and SEESORB 501 produced by SHIPRO KASEI KAISHA, LTD., which is a cyano acrylate compound.

The photopolymerization initiator includes a photo-radical initiator when the photocurable compound is a compound having a radical polymerizable functional group, and the photopolymerization initiator includes a photo-acid generator when the photocurable compound is a compound having a cation-polymerizable functional group. The photopolymerization initiator may be included in the ink of the present invention singly or in combinations of two or more kinds thereof. The photopolymerization initiator may be a combination of both of a photo-radical initiator and a photo-acid generator.

The photo-radical initiator includes a cleavable radical initiator and a hydrogen abstraction-type radical initiator.

Examples of the cleavable radical initiator include an acetophenone-based initiator, a benzoin-based initiator, an acylphosphine oxide-based initiator, and benzyl and methylphenylglyoxyester.

Examples of the hydrogen abstraction-type radical initiator include a benzophenone-based initiator, a thioxanthone-based initiator, an aminobenzophenone-based initiator, 10-butyl-2-chloroacridone, 2-ethylanthraquinone, 9,10-phenanthrenequinone and camphorquinone.

Examples of the photo-acid generator include compounds described in pages 187 to 192 of "Organic Materials for Imaging" edited by the Japanese Research Association for Organic Electronics Materials, published by Bunshin-publishing (1993).

The content of the photopolymerization initiator may be in any range where the ink can be sufficiently cured, and can be, for example, 0.01mass% or more and 10mass% or less based on the total mass of the ink of the present invention.

The colorant includes a dye and a pigment. The colorant is preferably a pigment from the viewpoint that an image favorable in weather resistance is obtained. The pigment can be selected from, for example, a yellow pigment, a red or magenta pigment, a blue or cyan pigment and a black pigment depending on the coloration and the like of an image to be formed.

Examples of the dispersant include a hydroxyl group-containing carboxylic acid ester, a salt of a long-chain polyaminoamide and a high molecular weight acid ester, a salt of a high molecular weight polycarboxylic acid, a salt of a long-chain polyaminoamide and a polar acid ester, a high molecular weight unsaturated acid ester, a high molecular weight copolymer, modified polyurethane, modified polyacrylate, a polyether ester-type anionic activator, a naphthalenesulfonic acid-formalin condensate salt, an aromatic sulfonic acid-formalin condensate salt, polyoxyethylene alkyl phosphoric acid ester, polyoxyethylene nonyl phenyl ether and stearylamine acetate.

The content of the dispersant can be, for example, 20mass% or more and 70mass% or less based on the total mass of the pigment.

Examples of the polymerization inhibitor include (alkyl)phenol, hydroquinone, catechol, resorcin, p-methoxyphenol, t-butylcatechol, t-butylhydroquinone, pyrogallol, 1,1-picrylhydrazyl, phenothiazine, p-benzoquinone, nitrosobenzene, 2,5-di-t-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)aniline oxide, dibutylcresol, cyclohexanone oximecresol, guaiacol, o-isopropylphenol, butyraldoxime, methyl ethyl ketoxime and cyclohexanone oxime.

Examples of the surfactant include anionic surfactants such as dialkylsulfosuccinic acid salts, alkylnaphthalenesulfonic acid salts and fatty acid salts, nonionic surfactants such as polyoxyethylene alkyl ethers, polyoxyethylene alkyl allyl ethers, acetylene glycols and polyoxyethylene-polyoxypropylene block copolymers, cationic surfactants such as alkylamine salts and quaternary ammonium salts, and silicone-based and fluorine-based surfactants.

Examples of commercially available products of the silicone-based surfactants include KF-351A, KF-352A, KF-642 and X-22-4272 produced by Shin-Etsu Chemical Co., Ltd., BYK 307, BYK 345, BYK 347 and BYK 348 produced by BYK Japan K.K. ("BYK" is a registered trademark of the company), and TSF4452 produced by Momentive Performance Materials Inc.

1-6. Physical properties

The viscosity at 80°C of the inkjet ink is preferably 3 mPa•s or more and 20 mPa•s or less from the viewpoint that ejection property through an inkjet head is more enhanced. The viscosity at 25°C of the inkjet ink is preferably 1,000 mPa•s or more from the viewpoint that the ink, when landed and cooled to room temperature, sufficiently undergoes gelation.

The gelation temperature of the inkjet ink is preferably 40°C or more and 70°C or less. When the gelation temperature of the ink is 40°C or more, the ink is landed onto a recording medium and then rapidly undergoes gelation, and therefore is more enhanced in pinning property. When the gelation temperature of the ink is 70°C or less, the ink can be more stably ejected because of hardly undergoing gelation in ejection of the inkjet ink through an inkjet head where the ink temperature is usually about 80°C.

The viscosity at 80°C, the viscosity at 25°C and the gelation temperature of the inkjet ink can be determined by measuring the change in temperature of dynamic viscoelasticity of the ink by a rheometer. In the present invention, such viscosities and gelation temperature are values obtained by the following method. The inkjet ink is heated to 100°C, and the ink is cooled to 20°C in conditions of a shear speed of 11.7 (1/s) and a temperature drop rate of 0.1°C/s with the viscosity being measured by a stress control-type rheometer, Physica MCR301 (cone plate diameter: 75 mm, cone angle: 1.0°) manufactured by Anton Paar GmbH, thereby providing the temperature change curve of the viscosity. The viscosity at 80°C and the viscosity at 25°C are determined by reading the viscosity at 80°C and the viscosity at 25°C in the temperature change curve of the viscosity, respectively. The gelation temperature is determined as the temperature at which the viscosity is 200 mPa•s in the temperature change curve of the viscosity.

The average particle size of the pigment particle is preferably 0.08 $\mu$m or more and 0.5 $\mu$m or less and the maximum particle size thereof is preferably 0.3 $\mu$m or more and 10 $\mu$m or less from the viewpoint that ejection property through an inkjet head is more enhanced. The average particle size of the pigment particle in the present invention is the value determined according to a dynamic light scattering method by use of Zetasizer Nano ZSP manufactured by Malvern Panalytical Ltd. An ink including a colorant has a high concentration, not to cause light to penetrate therethrough in this measurement instrument, and therefore the ink is diluted to 200-fold and then subjected to measurement. The measurement temperature is a normal temperature (25°C).

1-7. Preparation of ink

The inkjet ink can be obtained by, for example, mixing the above-described gelling agent, ultraviolet absorber and photocurable compound with arbitrary each component under heating. The resulting mixed liquid is preferably filtered by a predetermined filter. When an inkjet ink containing a pigment and a dispersant is prepared, a pigment dispersion where the pigment and the dispersant are dispersed in a solvent may be prepared in advance and the remaining component(s) may be added and mixed with heating.

The pigment and the dispersant can be dispersed by, for example, a ball mill, a sand mill, an attritor, a roll mill, an agitator, a Henschel mixer, a colloid mill, an ultrasound homogenizer, a pearl mill, a wet jet mill, and a paint shaker.

2. Image forming method

The image forming method of the present invention can be performed in the same manner as in a known image forming method including discharging an inkjet ink through an inkjet head to land the inkjet ink onto a recording medium, and then curing the inkjet ink, except that the above-described inkjet ink is used.

For example, the image forming method of the present invention includes a first step of ejecting the inkjet ink through a nozzle of an inkjet head to land the inkjet ink onto a recording medium, and a second step irradiating the droplet landed onto the recording medium, with actinic radiation.

2-1. First step

In the first step, a droplet of the inkjet ink is discharged through an inkjet head, and landed onto a portion depending on an image to be formed, of a recording medium.

The discharge system through the inkjet head may be any of an on-demand system and a continuous system. The inkjet head of the on-demand system may be any of electromechanical transduction systems of a single cavity type, a double cavity type, a bender type, a piston type, a share mode type, a shared-wall type, and the like, and thermoelectric systems of a thermal inkjet type, a Bubble Jet (Bubble Jet is a registered trademark of Canon Inc.) type, and the like.

The droplet of the inkjet ink can be enhanced in discharge stability by discharge through the inkjet head under heating. The temperature of the ink during discharge is preferably 35°C or more and 100°C or less, and is more preferably 35°C or more and 80°C or less for the purpose of a more enhancement in discharge stability. In particular, the ink is preferably ejected at an ink temperature at which the ink viscosity is 7 mPa•s or more and 15 mPa•s or less, more preferably 8 mPa•s or more and 13 mPa•s or less.

The inkjet ink is preferably set so that the temperature of the ink filled in a recording head for discharge is from (gelation temperature + 10)°C to (gelation temperature + 30)°C of the ink, in order to enhance ejection property of the ink through the recording head for discharge. When the temperature of the ink in the recording head for discharge is less than (gelation temperature + 10)°C, the ink undergoes gelation in the recording head for discharge or the nozzle surface, to easily cause deterioration in ejection property of the ink. On the other hand, when the temperature of the ink in the recording head for discharge exceeds (gelation temperature + 30)°C, the temperature of the ink is so high that the ink component may be degraded.

The method for heating the ink to a predetermined temperature is not particularly limited. The ink can be heated to a predetermined temperature by, for example, heating at least any of an ink feed system of an ink tank constituting a head carriage, a feed pipe, a front room ink tank immediately before the head, and the like, as well as a pipe equipped with a filter, and a piezo head, by a panel heater, a ribbon heater, temperature-retaining water, and the like.

The amount of the ink droplet during discharge is preferably 2 pL or more and 20 pL or less in terms of the recording rate and the image quality.

2-2. Second step

In the second step, the inkjet ink landed in the second step is irradiated with actinic energy ray, to form an image obtained by curing the ink. The irradiation with actinic energy ray is preferably made within a period of 0.001 seconds or more and 1.0 seconds or less after landing of the ink, and is more preferably made within a period of 0.001 seconds or more and 0.5 seconds or less in order to form a highly fine image.

The actinic energy ray with which the ink is irradiated can be selected from electron beam, ultraviolet light, $\alpha$-ray, $\gamma$-ray, X-ray, and the like, and ultraviolet light, among them, is preferably adopted for such irradiation. Irradiation with ultraviolet light can be made by, for example, a water-cooled LED at 395 nm manufactured by Phoseon Technology. An LED can be adopted as a light source, to thereby suppress the occurrence of curing failure of the ink due to melting of the ink by radiation heat from a light source.

An LED light source is disposed so that the peak illuminance of ultraviolet light having a wavelength of 370 nm or more and 410 nm or less on the surface of an image is 0.5 W/cm$^2$ or more and 10 W/cm$^2$ or less, and is more preferably disposed so that the peak illuminance is 1 W/cm$^2$ or more and 5 W/cm$^2$ or less. The amount of light with which an image is irradiated is preferably less than 1,000 mJ/cm$^2$ from the viewpoint that radiation heat is inhibited from being applied to the ink.

When irradiation with light is conducted, the oxygen concentration around the ink can be reduced to thereby sufficiently cure the ink even in the case of a smaller amount of the photopolymerization initiator being contained. Therefore, deterioration in image quality due to bleeding out of the residue or the like of the photopolymerization initiator can be suppressed. Examples of the measure for reducing the oxygen concentration include replacement with gas such as nitrogen gas. The oxygen concentration around the ink in irradiation with light is preferably 0.1volume% or more and 10.0volume% or less, more preferably 0.5volume% or more and 8.0volume% or less, further preferably 0.5volume% or more and 6.0volume% or less from the above viewpoint. The oxygen concentration around the ink can be reduced to thereby sufficiently cure the ink even by a smaller amount of light.

The irradiation with actinic energy ray may be divided to two stages, and first, the ink may be temporarily cured by irradiation with actinic energy ray according to the above method within a period of 0.001 seconds or more and 2.0 seconds or less after landing of the ink, and may be further irradiated with actinic energy ray after completion of the entire printing, to thereby mainly cure the ink. If the irradiation with actinic energy ray is divided to two stages, shrinkage of a recording material, caused during curing of the ink, less occurs.

In the image forming method of the present invention, when the total ink thickness after irradiation of the ink landed onto a recording medium with actinic energy ray and then curing thereof is set to 2 $\mu$m or more and 20 $\mu$m or less, the occurrence of curl and wrinkle of the recording medium, and the change in texture of the recording medium can be efficiently prevented. The "total ink thickness" herein means the total value of the thickness of each ink for coating or printing with or onto the recording medium, or the average value of the thickness measured at each of a plurality of points at which the amount of each ink landed is estimated to be large.

2-3. Recording medium

The recording medium for use in the image forming method of the present invention may be any medium on which an image can be formed by the ink set, and, for example, can be a non-absorbable recording medium (plastic substrate) formed from plastics such as polyester, polyvinyl chloride, polyethylene, polyurethane, polypropylene, an acrylic resin, polycarbonate, polystyrene, an acrylonitrile-butadiene-styrene copolymer, polyethylene terephthalate and polybutadiene terephthalate, a non-absorbable inorganic recording medium such as metal and glass, and absorbable paper (for example, coated paper for printing, and coated paper B for printing).

Examples

Hereinafter, the present invention will be more specifically described with reference to Examples. The scope of the present invention is not construed as being limited to such

1. Preparation of ink

Each ink was prepared using the following components.

[Photocurable compound]

NPGDA: propyleneoxide-modified neopentyl glycol diacrylate (SR9003: produced by Sartomer)
HDDA: 1,6-hexanediol diacrylate (A-HD-N: produced by Shi-Nakamura Chemical Co., Ltd.)
TPGTA: ethyleneoxide-modified tripropylene glycol diacrylate (SR306H: produced by Sartomer)
TMPTA: ethyleneoxide-modified trimethylolpropane triacrylate (SR499: produced by Sartomer)
PEGDA: polyethylene glycol diacrylate (SR210A: produced by Sartomer)
UA oligomer: urethane acrylate oligomer (ETERCURE6147: produced by Eternal Chemical Co., Ltd.)
PEA oligomer: polyester acrylate oligomer (CN2273: produced by Sartomer)

[Gelling agent]

T1: distearyl ketone (KAOWAX T1 produced by Kao Corporation)
WEP-3: behenyl behenate (Nissan Elector WEP-3 produced by NOF Corporation)

[Ultraviolet absorber]

Each compound described in Table 1

[Photopolymerization initiator]

819: IRGACURE 819 produced by BASF SE ("IRGACURE" is a registered trademark of the company)
369: IRGACURE 369 produced by BASF SE
7010: Speedcure 7010 produced by Lambson Ltd. ("Speedcure" is a registered trademark of the company)

[Polymerization inhibitor]

UV10: IRGASTAB UV10 produced by BASF SE ("IRGASTAB" is a registered trademark of the company)

[Surfactant]

TSF4452: silicone-based surfactant (TSF4452 produced by Momentive Performance Materials Inc.)

[Light stabilizer]

Tinuvin 123: hindered amine-based light stabilizer (Tinuvin 123 produced by BASF SE)

[Stabilizer]

FA4431: Dispex Ultra FA4431 produced by BASF SE ("Dispex" is a registered trademark of the company)

[Pigment]

PY185: yellow pigment (Paliotol Yellow D1155 produced by BASF SE)

[Dispersant]

EFKA7701: EFKA7701 produced by BASF SE
Solsperse 22000: Solsperse 22000 produced by BASF SE

The type and the molecular weight of each ultraviolet absorber for use in ink preparation are shown in Table 1.

[Table 1]

Table 1: Type and molecular weight of ultraviolet absorber

| Number | Manufacturer, Product name | Type | Molecular weight |
|---|---|---|---|
| a | ADK STAB LA-32 produced by ADEKA CORPORATION | Benzotriazole-based | 225 |
| b | sumisorb 340 produced by Sumitomo Chemical Co., Ltd. | Benzotriazole-based | 323 |
| c | sumisorb 130 produced by Sumitomo Chemical Co., Ltd. | Benzophenone-based compound | 326 |
| d | Tinuvin 571 produced by BASF SE | Benzotriazole-based | 394 |
| e | Tinuvin 1577ED produced by BASF SE | Hydroxyphenyltriazine-based | 425 |
| f | Tinuvin 384-2 produced by BASF SE | Benzotriazole-based | 452 |
| 9 | Tinuvin 405 produced by BASF SE | Hydroxyphenyltriazine-based | 584 |
| h | Tinuvin 460 produced by BASF SE | Hydroxyphenyltriazine-based | 630 |
| i | Tinuvin 400 produced by BASF SE | Hydroxyphenyltriazine-based | 640 |
| j | Tinuvin 479 produced by BASF SE | Hydroxyphenyltriazine-based | 676 |

(continued)

| Number | Manufacturer, Product name | Type | Molecular weight |
|--------|---------------------------|------|-----------------|
| k | Tinuvin 477 produced by BASF SE | Hydroxyphenyltriazine-based | 958 |

1-1. Preparation of pigment dispersion

Three compounds shown below were placed in a stainless beaker. These were heated and stirred for 1 hour with being heated on a hot plate at 65°C, to dissolve the dispersants. NPGDA used for preparation of a pigment dispersion here contained 0.2mass% of UV-10.

| | | |
|---|---|---|
| Dispersant: | EFKA7701 | 5.6 parts by weight |
| Dispersant: | Solsperse22000 | 0.4 parts by weight |
| Photocurable compound: | NPGDA | 80.6 parts by weight |

After the resulting solution was cooled to room temperature, 20 parts by weight of the following pigment was added thereto, the resultant was placed, together with 200 g of zirconia beads having a diameter of 0.5 mm, in a glass bottle, and the bottle was sealed. After a dispersing treatment with a paint shaker for 5 hours, the zirconia beads were removed to obtain a pigment dispersion.

Pigment:    PY185    20.0 parts by weight

1-2. Preparation of ink

The following components were added to the pigment dispersion at the following ratio, and stirred at 80°C to obtain an ink solution. The ink solution was filtered by a 3-$\mu$m membrane filter of Teflon (registered trademark) manufactured by ADVATEC, to obtain each of ink 1 to ink 18. Each compound described in Table 2 and Table 3, as the ultraviolet absorber, was here adjusted at each ratio thereof to the total mass of the gelling agent, as described in Table 2 and Table 3, and was contained in each ink. The amount of TMPTA was adjusted to allow the total of all the components to be 100 parts by weight.

(Formulation of ink 1 to ink 18)

| | | |
|---|---|---|
| Pigment dispersion: | | 15.0 parts by weight |
| Photocurable compound: | NPGDA | 10.0 parts by weight |
| Photocurable compound: | HDDA | 20.0 parts by weight |
| Photocurable compound: | TMPTA | balance |
| Photocurable compound: | UA Oligomer | 10.0 parts by weight |
| Gelling agent: | T1 | 1.5 parts by weight |
| Gelling agent: | WEP-3 | 0.8 parts by weight |
| Photopolymerization initiator: | 819 | 3.0 parts by weight |
| Photopolymerization initiator: | 369 | 3.0 parts by weight |
| Photopolymerization initiator: | 7010 | 1.0 part by weight |
| Polymerization inhibitor: | UV-10 | 0.15 parts by weight |
| Surfactant: | TSF-4452 | 0.02 parts by weight |
| Light stabilizer: | Tinuvin 123 | 0.1 parts by weight |
| Stabilizer: | FA4431 | 1.0 part by weight |
| Ultraviolet absorber: | see Table 2 | |

The following components were added in the same manner at the following ratio to obtain each of ink 19 to ink 23 different in the content of the gelling agent from ink 1 to ink 18. The amount of TMPTA was adjusted to allow the total of all the components to be 100 parts by weight.

(Formulation of ink 19 to ink 23)

| | | |
|---|---|---|
| Pigment dispersion: | | 15.0 parts by weight |
| Photocurable compound: | TPGTA | 10.0 parts by weight |
| Photocurable compound: | PEGDA | 20.0 parts by weight |
| Photocurable compound: | TMPTA | balance |
| Photocurable compound: | PEA Oligomer | 20.0 parts by weight |
| Gelling agent: | T1 | 1.0 part by weight |
| Gelling agent: | WEP-3 | 0.8 parts by weight |
| Photopolymerization initiator: | 819 | 3.0 parts by weight |
| Polymerization inhibitor: | UV-10 | 0.15 parts by weight |
| Surfactant: | TSF-4452 | 0.02 parts by weight |
| Light stabilizer: | Tinuvin 123 | 0.1 parts by weight |
| Ultraviolet absorber: | see Table 3 | |

Ink 23 was prepared with addition of no light stabilizer.

2. Evaluation

2-1. Volatility

10 g of each ink was placed in a stainless vessel having a diameter of 48 mm, and warmed at 100°C for 4 hours. The change in mass before and after the warming was measured, and converted into the amount of volatilization per unit surface area·unit time, to evaluate the volatility according to the following criteria.

B: the amount of volatilization was 0.8 mg/cm$^2$·h or less

C: the amount of volatilization was 0.8 mg/cm$^2$·h to 1.2 mg/cm$^2$·h

D: the amount of volatilization was 1.6 mg/cm$^2$·h or more

2-2. Storage stability of gelation temperature

Each ink was stored in the state of not being subjected to light exposure in a dark room at 100°C for 2 weeks, and the gelation temperature (Tgel) (°C) of each ink was determined by measuring the gelation temperature (Tgel$_{rt}$) before the storage and the gelation temperature (Tgel$_{100°C2W}$) after the storage with a stress control-type rheometer (Physica MCR series manufactured by Anton Paar GmbH, cone plate: 75 mm in diameter, cone angle: 1.0°). The influence of the ultraviolet absorber on the storage stability of the gelation temperature was evaluated according to the following criteria based on the absolute value obtained by subtracting (Tgel$_{100°C2W}$) from (Tgel$_{rt}$).

The gelation temperature here represents a temperature at a complex viscosity of 1 Pa or more in the viscoelasticity curve which is obtained at a strain of 5% and an angular frequency of 10 radian/s with the temperature of an ink formed into a gel by heating being changed at a temperature drop rate of 0.1°C/s.

A: the absolute value of (Tgel$_{rt}$) - (Tgel$_{100°C2W}$) was 0.3°C or less

AB: the absolute value of (Tgel$_{rt}$) - (Tgel$_{100°C2W}$) was more than 0.3°C and 0.6°C or less

B: the absolute value of (Tgel$_{rt}$) - (Tgel$_{100°C2W}$) was more than 0.6°C and 1.0°C or less

C: the absolute value of (Tgel$_{rt}$) - (Tgel$_{100°C2W}$) was more than 1.0°C and 2.0°C or less

D: the absolute value of (Tgel$_{rt}$) - (Tgel$_{100°C2W}$) was more than 2.0°C

2-3. Weather resistance

Each ink was packed into a drum-type inkjet recording apparatus having an inkjet recording head equipped with a piezo inkjet nozzle. The apparatus was used to continuously perform image recording with a recording medium (Mari Coat (basis weight: 350 g/m$^2$) manufactured by Hokuetsu Corporation) being allowed to adsorb onto the drum and to be conveyed. The conveyance speed of the recording medium was 800 mm/sec.

The ink feed system of the inkjet recording apparatus included a piezo head where an ink tank, an ink passage, a sub ink tank immediately before an inkjet recording head, a pipe with a metal filter and a heater were built-in in the flowing direction of an ink. An ink was warmed to 90°C and allowed to flow from the ink tank to a head portion. The ink was also warmed in the heater of the piezo head, to raise again the ink temperature of the ink in the recording head to 90°C. In the piezo head, a head having a nozzle diameter of 22 $\mu$m and a nozzle resolution of 600 dpi was disposed in a zigzag pattern to form a nozzle arrangement of 1,200 dpi. The inkjet apparatus was used to apply a voltage so that the amount of a droplet was 9.0 pl, and a solid image was printed on the recording medium at 1,200 × 1,200 dpi. The drum temperature was controlled so that the surface temperature of a substrate immediately before the head was 46°C. Herein, the unit "dpi" represents the number of dots per 2.54 cm.

After printing, irradiation from an LED lamp (395 nm, 8 W/cm$^2$, manufactured by Phoseon Technology) was conducted within 1 second, to thereby cure an ink layer. The distance from the tube surface of the LED lamp to the recording medium was 50 mm. When an image was formed using each of ink 20 to ink 23, the irradiation from the LED lamp was conducted with the oxygen concentration being 5volume% or less by replacement of the air around the image printed, with nitrogen. The irradiation width in the conveyance direction was 100 mm.

After the reflection density $D_0$ immediately after formation, of the image thus formed, was measured using a reflection densitometer (FD-7 manufactured by Konica Minolta, Inc.), the image density D was again measured after irradiation with xenon light (76,000 lux) by use of a xenon weatherometer (Ci4000) manufactured by Atlas Materials Testing Technology 500 hours, and the density residual rate was determined from the difference in image density before and after the irradiation with xenon light according to the following equation, to evaluate the weather resistance according to the following criteria.

$$\text{Density residual rate (\%)} = D/D_0 \times 100$$

A: the density residual rate was more than 90%
AB: the density residual rate was more than 85% and 90% or less
B: the density residual rate was more than 80% and 85% or less
BC: the density residual rate was more than 75% and 80% or less
C: the density residual rate was more than 70% and 75% or less
D: the density residual rate was 70% or less

2-4. Pinning property

The image formed in 2-3 above, before irradiation with xenon light, was visually confirmed about whether or not there was any blank (a region on which no printing was made due to combining of dots) on the solid image portion of each sample. Evaluation was performed according to the following criteria.

A: there was no blank.
AB: while there was one blank, no problem about the appearance was exhibited
B: while there were two blanks, no problem about the appearance was exhibited
C: while there were 3 to 8 blanks, no problem about the image recognition was exhibited
D: a large number of blanks occurred, and the image was difficult to recognize

2-5. Evaluation results

Table 2 and Table 3 show the name of each ultraviolet absorber contained in ink 1 to ink 23, the content of the ultraviolet absorber based on the total mass of each ink, and the ratio of the gelling agent to the total mass, as well as the evaluation results of ink 1 to ink 23.

[Table 2]

Table 2: Ultraviolet absorber and evaluation of ink 1 to ink 18

| No. | Ink | | | Evaluation | | | |
|---|---|---|---|---|---|---|---|
| | Ultraviolet absorber | | | Volatility | Storage stability of gelation temperature | Weather resistance | Pinning property |
| | Number | Content | Ratio of gelling agent to total mass (%) | | | | |
| 1 | j | 0.5 | 22 | B | A | A | A |
| 2 | j | 1 | 43 | B | B | A | B |
| 3 | b | 1 | 43 | C | B | C | B |
| 4 | c | 1 | 43 | C | B | C | B |
| 5 | d | 1 | 43 | B | B | B | B |
| 6 | e | 0.5 | 22 | B | A | BC | A |
| 7 | e | 1 | 43 | B | B | AB | B |
| 8 | f | 0.5 | 22 | B | A | C | A |
| 9 | f | 1 | 43 | B | B | BC | B |
| 10 | 9 | 0.5 | 22 | B | A | B | A |
| 11 | h | 0.5 | 22 | B | A | B | A |
| 12 | i | 0.5 | 22 | B | A | B | A |
| 13 | k | 0.5 | 22 | B | B | B | B |
| 14 | k | 1 | 43 | B | C | A | C |
| 15 | - | - | 0 | B | A | D | A |
| 16 | j | 2 | 87 | B | D | A | D |
| 17 | a | 1 | 43 | D | A | D | A |
| 18 | b | 2 | 87 | C | C | C | C |

[Table 3]

Table 3: Ultraviolet absorber and evaluation of ink 19 to ink 23

| No. | Ink | | | Evaluation | | | |
|---|---|---|---|---|---|---|---|
| | Ultraviolet absorber | | | Volatility | Storage stability of gelation temperature | Weather resistance | Pinning property |
| | Number | Content | Ratio of gelling agent to total mass (%) | | | | |
| 19 | j | 0.5 | 28 | B | A | A | A |
| 20 | j | 0.7 | 39 | B | AB | A | AB |
| 21 | j | 1 | 56 | B | B | A | B |
| 22 | - | 0 | 0 | B | A | D | A |
| 23 | j | 0.5 | 28 | B | A | C | A |

**EP 3 434 741 A1**

Inks 1 to 14, 19 to 21 and 23 where the photocurable compound, the gelling agent, and the ultraviolet absorber having a molecular weight of 300 or more and 1,000 or less were contained and the content of the ultraviolet absorber was 5mass% or more and 60mass% or less based on the total mass of the gelling agent hardly caused volatilization of the ultraviolet absorber and also had a small influence of the ultraviolet absorber on pinning property and storage stability of the gelation temperature.

In particular, inks 1, 6, 8, 10 to 13, 19 and 20 where the content of the ultraviolet absorber was 20mass% or more and 40mass% or less based on the total mass of the gelling agent could have a smaller influence of the ultraviolet absorber on pinning property and storage stability of the gelation temperature (in particular, based on comparison of ink 1 with ink 2, comparison of ink 6 with ink 7, comparison of ink 13 with ink 14, and comparison of ink 19 with ink 20).

Inks 1, 2, 10 to 12 and 19 to 21 where the molecular weight of the ultraviolet absorber was 500 or more and 800 or less had a smaller influence of the ultraviolet absorber on weather resistance (in particular, based on comparison of inks 1 and 10 to 12 with inks 6 and 8, and comparison of ink 2 with inks 3 to 5, 7 and 9).

Inks 1, 2, 6, 7, 10 to 14 and 19 to 21 where the ultraviolet absorber was a hydroxyphenyltriazine-based compound could form an image more favorable in weather resistance, in particular, even when the content of the ultraviolet absorber was low (when the content was 20mass% or more and 40mass% or less based on the total mass of the gelling agent) (in particular, based on comparison of inks 1, 6 and 10 to 13 with ink 8).

In particular, inks 1, 2 and 19 to 21 where the ultraviolet absorber was 2-(2-hydroxy-4-[1-octyloxycarbonylethoxy]phenyl)-4,6-bis(4-phenylphenyl)-1,3,5-triazine (TINUVIN 479) could form an image higher in weather resistance. The effect was remarkably exerted also when the content of the ultraviolet absorber was low (inks 1, 19 and 20).

Inks 1 to 14 and 19 to 21 where the light stabilizer was contained could form an image higher in weather resistance.

On the contrary, inks 15 and 22 where no ultraviolet absorber was contained were hardly enhanced in weather resistance.

Ink 17 where the molecular weight of the ultraviolet absorber was less than 300 tended to be easily caused volatilization of the ultraviolet absorber and thus be deteriorated in weather resistance. Such a tendency was remarkably observed particularly in ink 16 where the content of the ultraviolet absorber was low.

Ink 16 and ink 18 where the ultraviolet absorber having a molecular weight of 300 or more was contained, but the content of the ultraviolet absorber was more than 60mass% based on the total mass of the gelling agent, tended to be deteriorated in pinning property and storage stability of the gelation temperature.

In image formation with the oxygen concentration being decreased by replacement of the air around an image with nitrogen, even inks smaller in the amount of the photopolymerization initiator could form an image high in weather resistance and few in blank(s) (inks 19 to 21 and 23).

The present application claims the priority based on Japanese Patent Application No. 2016-059711 filed on March 24, 2016, and the contents recited in the appended claims and the specification of the Japanese Patent Application are herein incorporated.

Industrial Applicability

The inkjet ink according to the present invention can form a highly fine image due to pinning property derived from a gelling agent, and can enhance weather resistance of an image formed. Therefore, the present invention can be preferably used for formation of an image to be disposed out of doors according to an inkjet method using an ink containing a gelling agent, and is considered to contribute to further diffusion of an inkjet method.

**Claims**

1. An actinic radiation-curable inkjet ink comprising a gelling agent, an ultraviolet absorber and a photocurable compound, wherein
   a molecular weight of the ultraviolet absorber is 300 or more and 1,000 or less, and
   a content of the ultraviolet absorber is 5mass% or more and 60mass% or less based on a total mass of the gelling agent.

2. The inkjet ink according to claim 1, wherein the content of the ultraviolet absorber is 20mass% or more and 40mass% or less based on a total mass of the gelling agent.

3. The inkjet ink according to claim 1 or 2, wherein the molecular weight of the ultraviolet absorber is 500 or more and 800 or less.

4. The inkjet ink according to any one of claims 1 to 3, wherein the ultraviolet absorber is a hydroxyphenyltriazine-based compound.

5. The inkjet ink according to any one of claims 1 to 4, further comprising a light stabilizer.

6. An image forming method comprising:

discharging a droplet of the inkjet ink according to any one of claims 1 to 5 through a nozzle of an inkjet head to land the droplet onto a recording medium; and
irradiating the droplet landed onto the recording medium with actinic radiation.

## INTERNATIONAL SEARCH REPORT

| | International application No. |
|---|---|
| | PCT/JP2017/007593 |

A. CLASSIFICATION OF SUBJECT MATTER
*C09D11/34*(2014.01)i, *B41J2/01*(2006.01)i, *B41M5/00*(2006.01)i, *C09D11/38*
(2014.01)i

According to International Patent Classification (IPC) or to both national classification and IPC

B. FIELDS SEARCHED

Minimum documentation searched (classification system followed by classification symbols)
C09D11/34, B41J2/01, B41M5/00, C09D11/38

Documentation searched other than minimum documentation to the extent that such documents are included in the fields searched
Jitsuyo Shinan Koho          1922–1996   Jitsuyo Shinan Toroku Koho  1996–2017
Kokai Jitsuyo Shinan Koho   1971–2017   Toroku Jitsuyo Shinan Koho  1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2013-124333 A  (Konica Minolta IJ Technologies, Inc.), 24 June 2013 (24.06.2013), claims; table 1; paragraphs [0151], [0162] to [0163] (Family: none) | 1-6 |
| Y | JP 2015-174334 A  (Konica Minolta, Inc.), 05 October 2015 (05.10.2015), table 1 (Family: none) | 1-6 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 April 2017 (14.04.17) | 25 April 2017 (25.04.17) |

| Name and mailing address of the ISA/ | Authorized officer |
|---|---|
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

**INTERNATIONAL SEARCH REPORT**

International application No.

PCT/JP2017/007593

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2014-001382 A  (Xerox Corp.),<br>09 January 2014 (09.01.2014),<br>claims<br>& US 2013/0333591 A1<br>claims<br>& KR 10-2013-0142086 A | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005178331 A
- JP 2006123459 A
- JP 2006193745 A
- JP 2010017710 A
- JP 2016059711 A

**Non-patent literature cited in the description**

- Organic Materials for Imaging. Bunshin-publishing, 1993, 187-192